(19) Europäisches Patentamt
European Patent Office
Office européen des brevets

(11) **EP 2 738 857 A1**

(12) **EUROPEAN PATENT APPLICATION**
published in accordance with Art. 153(4) EPC

(43) Date of publication:
04.06.2014 Bulletin 2014/23

(51) Int Cl.:
*H01M 4/86* (2006.01)          *B01J 23/42* (2006.01)
*H01M 4/88* (2006.01)          *H01M 8/10* (2006.01)

(21) Application number: 12818076.7

(22) Date of filing: 23.07.2012

(86) International application number:
PCT/JP2012/004668

(87) International publication number:
WO 2013/014910 (31.01.2013 Gazette 2013/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 27.07.2011   JP 2011163819

(71) Applicant: TOYOTA JIDOSHA KABUSHIKI
KAISHA
Toyota-shi, Aichi-ken, 471-8571 (JP)

(72) Inventor: AMEMIYA, Kazuki
Toyota-shi
Aichi 471-8571 (JP)

(74) Representative: Kuhnen & Wacker
Patent- und Rechtsanwaltsbüro
Prinz-Ludwig-Straße 40A
85354 Freising (DE)

(54) **CATALYST INK FOR FUEL CELL ELECTRODES, MEMBRANE ELECTRODE ASSEMBLY, FUEL CELL**

(57) A catalyst ink used for production of electrodes of a fuel cell includes: catalyst-carrying particles that are particles with a catalyst carried thereon; an ionomer having proton conductivity; and a dispersion solvent in which the catalyst-carrying particles and the ionomer are dispersed. An adsorption amount of the ionomer per unit specific surface area of the catalyst-carrying particles is 0.1 (mg/m$^2$) or greater.

Fig.4

**Description**

Technical Field

The present invention relates to a catalyst ink used for producing electrodes of a fuel cell, a membrane electrode assembly produced by using this catalyst ink and a fuel cell including this membrane electrode assembly.

Background Art

Fuel cells which generate power by an electrochemical reaction of a fuel gas and an oxidizing gas have been noted as the energy source. One type of such fuel cells is a polymer electrolyte fuel cell using a solid polymer electrolyte membrane as the electrolyte membrane. The polymer electrolyte fuel cell generally uses a membrane electrode assembly produced by forming electrodes (catalyst layers) on respective surfaces of the electrolyte membrane. In this membrane electrode assembly, the electrodes are formed by applying and drying a catalyst ink on the surfaces of the electrolyte membrane. This catalyst ink includes catalyst-carrying particles that are particles with a catalyst carried thereon, an ionomer having proton conductivity and a dispersion solvent in which the catalyst-carrying particles and the ionomer are dispersed.

In production of the membrane electrode assembly, cracking may occur in the electrodes in the process of forming the electrodes by drying the catalyst ink applied on the surfaces of the electrolyte membrane. This cracking of the electrodes accelerates degradation of the electrolyte membrane and deteriorates the durability of the membrane electrode assembly and the fuel cell. Various techniques have thus conventionally been proposed with respect to the catalyst ink (see, for example, Patent Literatures 1 to 3 given below).

Citation List

Patent Literature

PTL 1: JP 2008-041514A
PTL 2: JP 2009-059694A
PTL 3: JP 2004-220979A
PTL 4: JP 2009-301938A
PTL 5: JP 2008-047401A

SUMMARY OF INVENTION

Technical Problem

With respect to the catalyst ink described in any of the above patent literatures, however, there is still a room for improvement in preventing the occurrence of cracking of the electrodes in the membrane electrode assembly.

In order to solve the above problem, the object of the invention is to suppress the occurrence of cracking of electrodes of a fuel cell, i.e., electrodes in a membrane electrode assembly used for a fuel cell. Solution to Problem

In order to achieve at least part of the foregoing, the invention can be implemented as aspects or embodiments described below.

[First Aspect]

A catalyst ink for a fuel cell electrode, comprising:

catalyst-carrying particles that are particles with a catalyst carried thereon;
an ionomer having proton conductivity; and
a dispersion solvent in which the catalyst-carrying particles and the ionomer are dispersed, wherein
an adsorption amount of the ionomer per unit specific surface area of the catalyst-carrying particles is 0.1 $(mg/m^2)$ or greater.

[Second Aspect]

A catalyst ink for a fuel cell electrode, comprising:

catalyst-carrying particles that are particles with a catalyst carried thereon;
an ionomer having proton conductivity; and
a dispersion solvent in which the catalyst-carrying particles and the ionomer are dispersed, wherein
a surface monomolecular adsorption amount of the ionomer onto the catalyst-carrying particles is 0.1 ($mg/m^2$) or greater.

[Third Aspect]

A catalyst ink for a fuel cell electrode, comprising:

catalyst-carrying particles that are particles with a catalyst carried thereon;
an ionomer having proton conductivity; and
a dispersion solvent in which the catalyst-carrying particles and the ionomer are dispersed, wherein
a saturated adsorption amount of surface monomolecular adsorption of the ionomer onto the catalyst-carrying particles is 0.2 ($mg/m^2$) or greater.

The inventors of the present application have focused attention on new parameters which have not conventionally been focused on, with respect to the catalyst ink, i.e., the adsorption amount of the ionomer per unit specific surface area of the catalyst-carrying particles, the surface monomolecular adsorption amount of the ionomer onto the catalyst-carrying particles and the saturated adsorption amount of surface monomolecular adsorption of the ionomer onto the catalyst-carrying particles. The inventors of the present application have then experimentally found that the occurrence of cracking of the electrodes in the fuel cell (membrane electrode assembly) is suppressible by: controlling the adsorption amount of the ionomer per unit specific surface area of the catalyst-carrying particles to be 0.1 ($mg/m^2$) or greater (the first aspect); controlling the surface monomolecular adsorption amount of the ionomer onto the catalyst-carrying particles to be 0.1 ($mg/m^2$) or greater (the second aspect); or controlling the saturated adsorption amount of surface monomolecular adsorption of the ionomer onto the catalyst-carrying particles to be 0.2 ($mg/m^2$) or greater (the third aspect).

[Fourth Aspect]

A membrane electrode assembly used for a fuel cell, comprising:

an electrolyte membrane; and
an electrode formed on a surface of the electrolyte membrane by applying the catalyst ink for the fuel cell electrode according to any one of claims the first aspect to the third aspect.

The membrane electrode assembly according to the fourth aspect prevents cracking of the electrode in the membrane electrode assembly and thereby improves the durability of the fuel cell.

[Fifth Aspect]

A fuel cell, comprising:

the membrane electrode assembly according to the fourth aspect; and
separators placed on both faces of the membrane electrode assembly.

The fuel cell according to the fifth aspect prevents cracking of the electrode in the membrane electrode assembly and thereby improves the durability of the fuel cell.

BRIEF DESCRIPTION OF DRAWINGS

Fig. 1 is a diagram illustrating the schematic structure of a fuel cell 100 according to one embodiment of the invention;

Fig. 2 is a chart showing a relationship between the ionomer concentration (set configuration) in a reference solution and the signal intensity ratio of an NMR spectrum;

Fig. 3 is a chart showing variations in adsorption amount of an ionomer per unit specific surface area of platinum-carrying carbon with respect to a catalyst ink of Example and a catalyst ink of Comparative Example; and

Fig. 4 is a chart showing results of an acceleration test.

DESCRIPTION OF EMBODIMENTS

The following describes aspects of the invention with reference to an embodiment.

A. Fuel Cell:

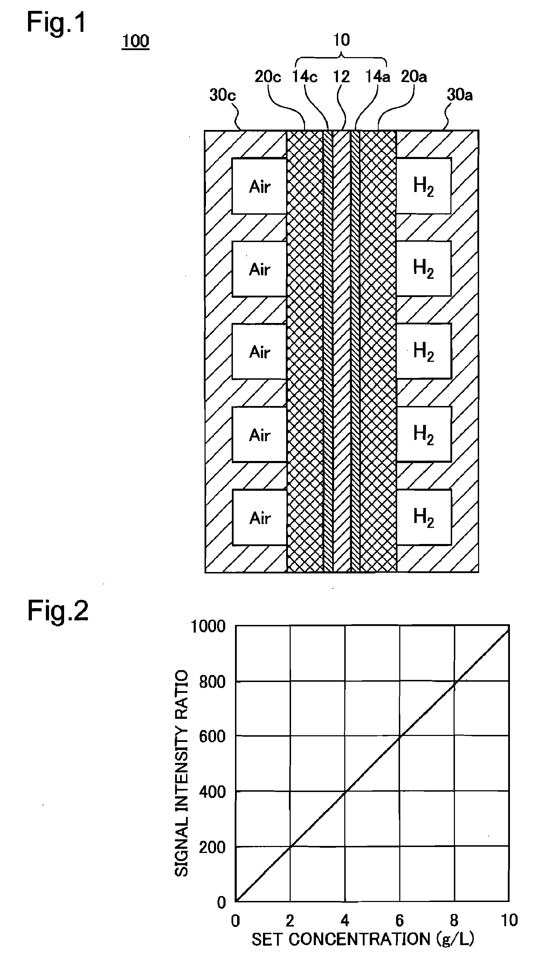

Fig. 1 is a diagram illustrating the schematic structure of a fuel cell 100 according to one embodiment of the invention. The cross sectional structure of the fuel cell 100 is schematically illustrated in Fig. 1. As illustrated, this fuel cell 100 is configured by joining an anode gas diffusion layer 20a and a cathode gas diffusion layer 20c on respective surfaces of a membrane electrode assembly 10 and placing this joined assembly between an anode-side separator 30a and a cathode-side separator 30c. In other words, the anode-side separator 30a and the cathode-side separator 30c are placed on both faces of the membrane electrode assembly 10.

The membrane electrode assembly 10 is configured by forming an anode catalyst layer 14a and a cathode catalyst layer 14c, which respectively serve as electrodes, on respective surfaces of an electrolyte membrane 12 having proton conductivity. Each of the anode catalyst layer 14a and the cathode catalyst layer 14c is formed by applying and drying a catalyst ink on the surface of the electrolyte membrane 12. According to this embodiment, an electrolyte membrane made of a solid polymer such as Nafion (registered trademark) is employed for the electrolyte membrane 12. According to this embodiment, carbon cloth is employed for the anode gas diffusion layer 20a and the cathode gas diffusion layer 20c. Another material having gas diffusivity and electrical conductivity, for example, carbon paper, may alternatively be employed for the anode gas diffusion layer 20a and the cathode gas diffusion layer 20c.

In the conventional membrane electrode assembly, cracking often occurs in the electrode when the catalyst ink is applied and dried on the surface of the electrolyte membrane in the process of formation of the electrodes, i.e., the anode catalyst layer and the cathode catalyst layer. In the membrane electrode assembly 10 of the embodiment, a catalyst ink capable of preventing the occurrence of cracking in the anode catalyst layer 14a and the cathode catalyst layer 14c is used in the process of formation of these catalyst layers 14a and 14c. The catalyst ink includes catalyst-carrying particles that are particles with catalysts carried thereon, an ionomer having proton conductivity, and a dispersion solvent serving to disperse the catalyst-carrying particles and the ionomer. This catalyst ink will be described later more in detail.

Ribs and grooves are formed on a surface of the anode-side separator 30a which is in contact with the anode gas diffusion layer 20a, as illustrated. These grooves form gas flow paths for the flows of hydrogen as a fuel gas and an anode-off gas discharged from the anode. Ribs and grooves are also formed on a surface of the cathode-side separator 30c which is in contact with the cathode gas diffusion layer 20c, as illustrated. These grooves form gas flow paths for the flows of the air as an oxidizing gas and a cathode-off gas discharged from the cathode. Any of various materials having electrical conductivity, such as carbon or a metal may be used as the material of the anode-side separator 30a and the cathode-side separator 30c.

B. Catalyst Ink:

B1. Preparation of Catalyst Inks:

A catalyst ink of Examples was prepared by the following process. For the purpose of comparison with the catalyst ink of Examples, a catalyst ink of Comparative Examples was also prepared. The catalyst ink of Comparative Examples was an example of the catalyst inks conventionally used for the membrane electrode assembly described above.

The process first provided catalyst-carrying particles, an ionomer and a dispersion solvent. In this Embodiment, carbon black with platinum (Pt) particles carried thereon (hereinafter referred to as platinum-carrying carbon) was used as the catalyst-carrying particles. The mean particle size of the platinum particles in the platinum-carrying carbon was 2 (nm). The weight ratio of the platinum particles in the platinum-carrying carbon was 30(%). Perfluorocarbon sulfonic acid polymer was used as the ionomer. The ion exchange equivalent weight (EW) of this ionomer was EX= 800. Water was used as the dispersion solvent. In the catalyst ink of Comparative Example, the platinum-carrying carbon and the ionomer were the same as those of the catalyst ink of Example, but the dispersion solvent was different from that of the catalyst ink of Example. In the catalyst ink of Comparative Example, a mixed solution of water and ethanol mixed at a weight ratio of 1 to 1 was used as the dispersion solvent.

The process then dispersed the platinum-carrying carbon and the ionomer in the dispersion solvent to prepare a dispersed solution. In this Example, the process mixed and stirred the platinum-carrying carbon, the ionomer and the dispersion solvent, so that the weight ratio of the carbon weight of the platinum-carrying carbon to the weight of the ionomer was 1 to 1 and the sum of these weights was 10(%) of the weight of the entire catalyst ink. These conditions were similarly employed for the catalyst ink of Comparative Example.

The process subsequently highly dispersed the platinum-carrying carbon and the ionomer in the dispersed solution to prepare the catalyst ink. In this Example, the process transferred the dispersed solution to a magnetic pot made of zirconium oxide ($ZrO_2$) and highly dispersed the dispersed solution with a planetary bead mill. The dispersion conditions with the planetary bead mill were 150 (rpm) and 3 hours. These dispersion conditions were similarly employed for the catalyst ink of Comparative Example.

B2. Analysis of Catalyst Inks :

The adsorption amount of the ionomer per unit specific surface area of the platinum-carrying carbon was determined by the following procedure with respect to the catalyst ink of Example and the catalyst ink of Comparative Example prepared by the process described above.

The procedure first determined the specific surface area of the platinum-carrying carbon. In this Example, the procedure deaerated the platinum-carrying carbon in a mixed gas stream of helium (He) and nitrogen ($N_2$) at 200(°C) for 30 minutes and subsequently determined the specific surface area by the continuous-flow BET one-point method. The measurement apparatus used was FlowSorb III2310 (manufactured by MICROMERITICS Ltd).

The procedure subsequently placed each of the catalyst ink of Example and the catalyst ink of Comparative Example in a micro tube and set the micro tube in a small centrifugal separator to perform centrifugal separation of the catalyst ink for 5 minutes. A supernatant obtained by this centrifugal separation was gently collected with a Pasteur pipette as a sample solution. This sample solution was subjected to nuclear magnetic resonance (NMR) spectroscopy, and the ionomer concentration in the sample solution was determined from the signal intensity ratio of the NMR spectrum.

This NMR spectroscopy placed the sample solution in an outer tube of an NMR sample tube (double tube) having the diameter of 5 (mm) and a solution of trifluoromethyl benzene dissolved in deuterated dimethyl sulfoxide as an internal standard solution in an inner tube, assembled the outer tube with the inner tube, and performed measurement under the following conditions. In this Example, JNM-ECA400 (manufactured by JEOL Ltd.) was used as the measurement apparatus.

<Measurement Conditions>

* Nucleus to be observed: $^{19}$F
* Resonance frequency: 376 (MHz)
* Probe: for F nucleus
* Measurement temperature: room temperature
* Cumulative number: 4096 times
* Cumulative time: about 3 hours

Prior to the NMR spectroscopy of this sample solution, a calibration curve was obtained for determination of the ionomer concentration in the sample solution from the signal intensity ratio of the NMR spectrum. More specifically, the procedure performed NMR spectroscopy under the above conditions with respect to a plurality of different reference solutions of known ionomer concentrations (a plurality of ionomer concentrations) prepared by diluting the ionomer with water and determined a relationship between the ionomer concentration (set concentration) in the reference solution and the signal intensity ratio of the NMR spectrum.

Fig. 2 is a chart showing a relationship between the ionomer concentration (set configuration) in the reference solution and the signal intensity ratio of the NMR spectrum. As illustrated, the signal intensity ratio of the NMR spectrum is proportional to the ionomer set concentration. The ionomer concentration in the sample solution is thus determinable according to Equation (1) given below:

[Eq. 1]

$$\text{Ionomer concentration [g/L] in sample solution}$$
$$= \frac{\text{Signal intensity ratio of sample solution}}{\text{Signal intensity ratio of 1 g/L reference solution}} \times (\text{concentration [g/L] of 1 g/L reference solution})$$
$$(1)$$

In Equation (1), the "1 g/L reference solution" denotes a reference solution having the ionomer concentration (set concentration) of 1 (g/L).

The procedure subsequently determined an adsorption amount of the ionomer onto the platinum-carrying carbon included in the catalyst ink, from which the sample solution was separated. The adsorption amount of the ionomer onto this platinum-carrying carbon is thus determinable from the ionomer concentration in the sample solution determined by Equation (1) according to Equation (2) given below:

[Eq. 2]

$$\text{Ionomer adsorption amount [mg] =}$$
$$\{(\text{Set concentration [g/L] of reference solution}) - (\text{Ionomer concentration [g/L]}$$
$$\text{in sample solution})\} \times 1 \text{ [mL]} \quad (2)$$

The procedure then determined an adsorption amount of the ionomer per unit specific surface area of the platinum-carrying carbon according to Equation (3) given below:

[Eq. 3]

$$\text{Ionomer adsorption amount per unit specific surface area [g/m}^2\text{]}$$
$$= \frac{\text{Ionomer adsorption amount [mg]}}{(\text{Specific surface area [m}^2\text{/g]}) \times (\text{Addition amount of platinum - carrying carbon [mg]})}$$
$$(3)$$

The "ionomer adsorption amount" as the numerator on the right side of Equation (3) is the "ionomer adsorption amount" determined by Equation (2). The "specific surface area" as the denominator on the right side of Equation (3) is the "specific surface area of platinum-carrying carbon" determined by the continuous-flow BET one-point method described above..

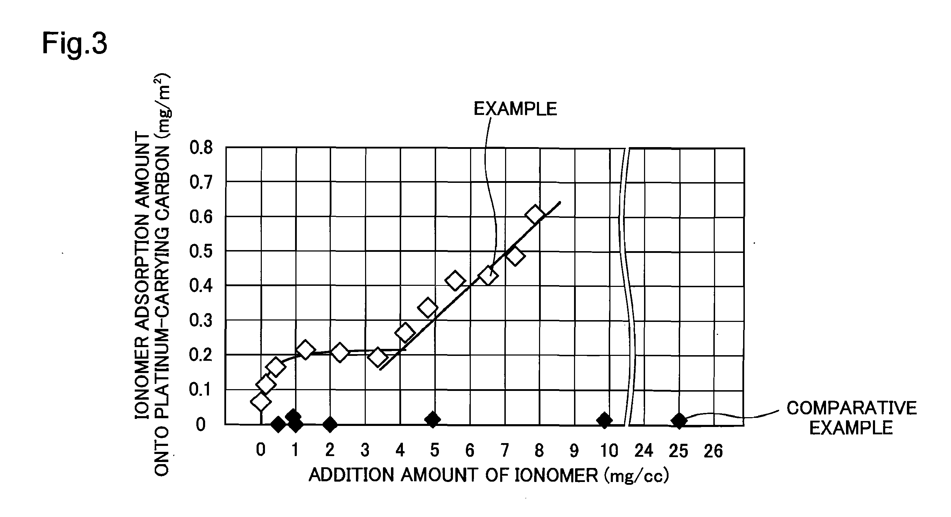

Fig. 3 is a chart showing variations in adsorption amount of the ionomer per unit specific surface area of the platinum-carrying carbon with respect to the catalyst ink of Example and the catalyst ink of Comparative Example. In Fig. 3, the values of the "closed diamond" symbol show the relationship between the addition amount of the ionomer and the adsorption amount of the ionomer per unit specific surface area of the platinum-carrying carbon with respect to a catalyst ink using a mixed solution of water and ethanol mixed at a weight ratio of 1 to 1 as the dispersion solvent like the catalyst ink of Comparative Example. The values of the "open diamond" symbol show the relationship between the addition amount of the ionomer and the adsorption amount of the ionomer per unit specific surface area of the platinum-carrying carbon with respect to a catalyst ink using water as the dispersion solvent like the catalyst ink of Example.

As understood from Fig. 3, with respect to the catalyst ink using the mixed solution of water and ethanol mixed at the weight ratio of 1 to 1 as the dispersion solvent, the adsorption amount of the ionomer per unit specific surface area of the platinum-carrying carbon did not increase even with an increase in addition amount of the ionomer. With respect to the catalyst ink using water as the dispersion solvent, on the other hand, the adsorption amount of the ionomer per unit specific surface area of the platinum-carrying carbon increased with an increase in addition amount of the ionomer.

Additionally, as shown in Fig. 3, the adsorption of the ionomer onto the platinum-carrying carbon proceeded in two stages when water was used as the dispersion solvent included in the catalyst ink. For the Examples of Fig. 3, surface monomolecular adsorption according to the Langmuir adsorption isotherm equation was observed in a low ionomer concentration range having the addition amount of the ionomer of less than about 4 (mg/cc) (first stage). In other words, in the first stage, surface monomolecular adsorption of the ionomer molecules onto the platinum-carrying carbon proceeded and eventually reached saturation. For the Examples of Fig. 3, the saturated adsorption amount of surface monomolecular adsorption of the ionomer molecules onto the platinum-carrying carbon was about 0.2 (mg/m$^2$). In a high ionomer concentration range having the addition amount of the ionomer of not less than about 4 (mg/cc) (second stage), after saturation of the surface monomolecular adsorption of the ionomer molecules onto the platinum-carrying carbon, the adsorption amount of the ionomer onto the platinum-carrying carbon increased with an increase in addition amount of the ionomer. This may be attributed to that the ionomer molecules are aggregated on the platinum-carrying carbon by the depletion phenomenon. The ionomer molecular layer adsorbed on the platinum-carrying carbon is expected to be multilayered by aggregation of the ionomer molecules.

C. Evaluations:

C1. Catalyst Ink:

The sedimentation state of the dispersed platinum-carrying carbon after preparation of the catalyst ink was observed with respect to the catalyst ink of Example and the catalyst ink of Comparative Example. Sedimentation of the platinum-carrying carbon was observed in the catalyst ink of Comparative Example. No substantial sedimentation of the platinum-carrying carbon was observed, on the other hand, in the catalyst ink of Example. This may be attributed to that the catalyst ink of Example had the sufficiently greater adsorption amount of the ionomer onto the platinum-carrying carbon compared with the catalyst ink of Comparative Example and accordingly had the good dispersion state of the platinum-carrying carbon and the ionomer.

C2. Electrode:

The surface condition of electrodes was observed with respect to a membrane electrode assembly 10 produced by using the catalyst ink of Example (hereinafter referred to as membrane electrode assembly 10 of Example) and a membrane electrode assembly produced by using the catalyst ink of Comparative Example (hereinafter referred to as membrane electrode assembly of Comparative Example). A large number of cracks were observed on the electrodes in the membrane electrode assembly of Comparative Example. The membrane electrode assembly 10 of Example, on the other hand, had a significantly less number of cracks occurring on the electrodes, compared with the membrane electrode assembly of Comparative Example.

C3. Durability:

An acceleration test was performed for evaluation of the durability with respect to a fuel cell 100 using the membrane electrode assembly 10 of Example and a fuel cell using the membrane electrode assembly of Comparative Example.

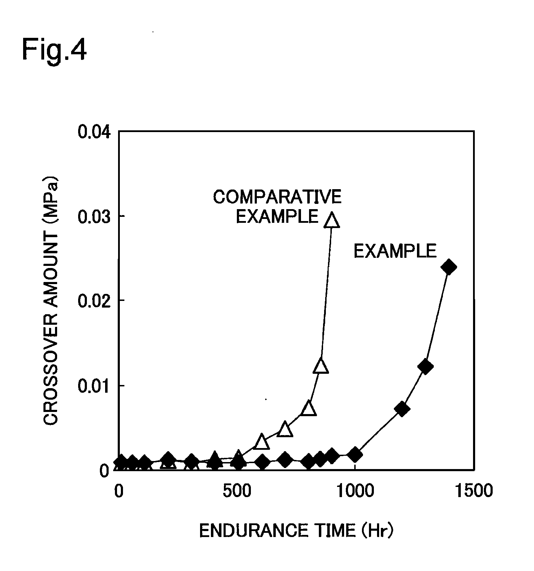

Fig. 4 is a chart showing the results of the acceleration test. More specifically, Fig. 4 shows a relationship between the endurance time, i.e., the power generation time by the acceleration test and the crossover amount. The crossover amount herein denotes the amount of gas crossover (transmission amount) between the anode and the cathode. An increase in crossover amount is attributed from degradation of the electrolyte membrane in the membrane electrode assembly. As illustrated, In the fuel cell using the membrane electrode assembly of Comparative Example, the crossover amount abruptly increased when the endurance time exceeded 500 hours. In the fuel cell 100 using the membrane electrode assembly 10 of Example, on the other hand, the crossover amount abruptly increased when the endurance time exceeded 1000 hours. In other words, the fuel cell 100 using the membrane electrode assembly 10 of Example had the improved durability, compared with the fuel cell using the membrane electrode assembly of Comparative Example.

The catalyst ink of Example described above can suppress the occurrence of cracking of the electrodes in the membrane electrode assembly 10 and improve the durability of the fuel cell 100. The inventors of the present application have found that controlling the adsorption amount of the ionomer per unit specific surface area of the catalyst-carrying particles to be 0.1 ($mg/m^2$) or greater, controlling the surface monomolecular adsorption amount of the ionomer onto the catalyst-carrying particles to be 0.1 ($mg/m^2$) or greater and controlling the saturated adsorption amount of surface monomolecular adsorption of the ionomer onto the catalyst-carrying particles to be 0.2 ($mg/m^2$) or greater with respect to the catalyst ink including the catalyst-carrying particles, the ionomer and the dispersion solvent suppress the occurrence of cracking of the electrodes in the membrane electrode assembly and improve the durability of the fuel cell.

D. Modifications:

The foregoing describes the invention with reference to the embodiment. The invention is, however, not limited to the above embodiment, but a multiplicity of variations and modifications may be made to the embodiment without departing from the scope of the invention. Some examples of possible modifications are given below.

D1. Modification 1:

The above embodiment uses platinum (Pt) as the catalyst in the catalyst ink, but the invention is not limited to this embodiment. Another catalyst, for example, a platinum alloy or palladium may be used as the catalyst.

D2. Modification 2:

The above embodiment uses carbon black as the catalyst-carrying particles in the catalyst ink, but the invention is not limited to this embodiment. Another type of particles having electrical conductivity may be used as the catalyst-carrying particles.

D3. Modification 3:

The above embodiment uses perfluorocarbon sulfonic acid polymer as the ionomer in the catalyst ink, but the invention is not limited to this embodiment. Another ionomer having proton conductivity may be used as the ionomer.

D4. Modification 4:

The above embodiment controls the adsorption amount of the ionomer per unit specific surface area of the catalyst-carrying particles to be 0.1 $(mg/m^2)$ or greater, controls the surface monomolecular adsorption amount of the ionomer onto the catalyst-carrying particles to be 0.1 $(mg/m^2)$ or greater and controls the saturated adsorption amount of surface monomolecular adsorption of the ionomer onto the catalyst-carrying particles to be 0.2 $(mg/m^2)$ or greater by changing the dispersion solvent included in the catalyst ink to, for example, water, but the invention is not limited to this embodiment. For example, the adsorption amount of the ionomer per unit specific surface area of the catalyst-carrying particles may be controlled to be 0.1 $(mg/m^2)$ or greater, the surface monomolecular adsorption amount of the ionomer onto the catalyst-carrying particles may be controlled to be 0.1 $(mg/m^2)$ or greater or the saturated adsorption amount of surface monomolecular adsorption of the ionomer onto the catalyst-carrying particles may be controlled to be 0.2 $(mg/m^2)$ or greater by changing, for example, the dispersion technique (process of kneading the catalyst ink or mixing the catalyst ink) in the process of preparation of the catalyst ink, the temperature, the functional group on the carbon surface or the shape (roughness) of the carbon surface.

The catalyst ink of the above embodiment satisfies all the three conditions, i.e., (i) the adsorption amount of the ionomer per unit specific surface area of the catalyst-carrying particles is 0.1 $(mg/m^2)$ or greater; (ii) the surface monomolecular adsorption amount of the ionomer onto the catalyst-carrying particles is 0.1 $(mg/m^2)$ or greater; and (iii) the saturated adsorption amount of surface monomolecular adsorption of the ionomer onto the catalyst-carrying particles is 0.2 $(mg/m^2)$ or greater, but the invention is not limited to this embodiment. The catalyst ink may be made to satisfy at least one condition of the above three conditions.

Reference Signs List

10 Membrane electrode assembly
12 Electrolyte membrane
14a Anode catalyst layer
14c Cathode catalyst layer
20a Anode gas diffusion layer
20c Cathode gas diffusion layer
30a Anode-side separator
30c Cathode-side separator
100 Fuel cell

**Claims**

**1.** A catalyst ink for a fuel cell electrode, comprising:

catalyst-carrying particles that are particles with a catalyst carried thereon;
an ionomer having proton conductivity; and

a dispersion solvent in which the catalyst-carrying particles and the ionomer are dispersed, wherein an adsorption amount of the ionomer per unit specific surface area of the catalyst-carrying particles is 0.1 (mg/m$^2$) or greater.

2. A catalyst ink for a fuel cell electrode, comprising:

catalyst-carrying particles that are particles with a catalyst carried thereon;
an ionomer having proton conductivity; and
a dispersion solvent in which the catalyst-carrying particles and the ionomer are dispersed, wherein a surface monomolecular adsorption amount of the ionomer onto the catalyst-carrying particles is 0.1 (mg/m$^2$) or greater.

3. A catalyst ink for a fuel cell electrode, comprising:

catalyst-carrying particles that are particles with a catalyst carried thereon;
an ionomer having proton conductivity; and
a dispersion solvent in which the catalyst-carrying particles and the ionomer are dispersed, wherein a saturated adsorption amount of surface monomolecular adsorption of the ionomer onto the catalyst-carrying particles is 0.2 (mg/m$^2$) or greater.

4. A membrane electrode assembly used for a fuel cell, comprising:

an electrolyte membrane; and
an electrode formed on a surface of the electrolyte membrane by applying the catalyst ink for the fuel cell electrode according to any one of claims 1 to 3.

5. A fuel cell, comprising:

the membrane electrode assembly according to claim 4; and
separators placed on both faces of the membrane electrode assembly.

## Fig.1

## Fig.2

Fig.3

IONOMER ADSORPTION AMOUNT ONTO PLATINUM-CARRYING CARBON (mg/m²)

ADDITION AMOUNT OF IONOMER (mg/cc)

EXAMPLE

COMPARATIVE EXAMPLE

# Fig.4

<table>
<tr><td colspan="2" align="center">**INTERNATIONAL SEARCH REPORT**</td><td colspan="2">International application No.<br>PCT/JP2012/004668</td></tr>
</table>

A. CLASSIFICATION OF SUBJECT MATTER
*H01M4/86*(2006.01)i, *B01J23/42*(2006.01)i, *H01M4/88*(2006.01)i, *H01M8/10*
(2006.01)i

According to International Patent Classification (IPC) or to both national classification and IPC

B. FIELDS SEARCHED

Minimum documentation searched (classification system followed by classification symbols)
H01M4/86, B01J23/42, H01M4/88, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-59694 A  (Toyota Motor Corp.),<br>19 March 2009 (19.03.2009),<br>claims; paragraphs [0048] to [0050]; fig. 5<br>(Family: none) | 1-5 |
| A | JP 2009-252587 A  (Toyota Motor Corp.),<br>29 October 2009 (29.10.2009),<br>claims<br>(Family: none) | 1-5 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>   29 August, 2012 (29.08.12) | Date of mailing of the international search report<br>   11 September, 2012 (11.09.12) |
| Name and mailing address of the ISA/<br>   Japanese Patent Office | Authorized officer |
| Facsimile No. | Telephone No. |

Form PCT/ISA/210 (second sheet) (July 2009)

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008041514 A
- JP 2009059694 A
- JP 2004220979 A
- JP 2009301938 A
- JP 2008047401 A